Europäisches Patentamt

European Patent Office

Office européen des brevets

(11) Numéro de publication: **0 228 333**
**A2**

# (12) DEMANDE DE BREVET EUROPEEN

(21) Numéro de dépôt: **86402895.6**

(22) Date de dépôt: **22.12.86**

(51) Int. Cl.4: **G 01 N 25/18**

(30) Priorité: **27.12.85 FR 8519342**

(43) Date de publication de la demande:
**08.07.87 Bulletin 87/28**

(84) Etats contractants désignés: **DE FR GB IT NL**

(71) Demandeur: **BULL S.A.**
**121 avenue de Malakoff P.B. 193.16**
**F-75764 Paris Cédex 16 (FR)**

(72) Inventeur: **Bonnefoy, Jean**
**25 Avenue de la Grande Armée**
**F-75016 Paris (FR)**

(74) Mandataire: **Denis, Hervé et al**
**BULL S.A. Industrial Property Department 25 avenue de**
**la Grande-Armée**
**F-75016 Paris (FR)**

(54) **Procédé et dispositif de mesure de la résistance thermique d'un élément tel qu'un équipement de circuits intégrés de haute densité.**

(57) Le dispositif de mesure (10) conforme à l'invention comprend une source chaude (14) et une source froide (18) pourvues chacune d'un thermocouple (21, 22) et reliées par un barreau massif en cuivre (17) en contact avec la source chaude et espacé de la source froide selon un écartement (19) réglable.

Le procédé de mesure repose sur le calcul de la résistance thermique R = (T1 -T2)/Q, où T1 - T2 et Q sont respectivement la différence de température et le flux thermique entre les sources. On calcule R1 avec l'élément (11), puis R2 sans l'élément (11). La différence R1 - R2 donne la résistance thermique de l'élément.

FIG. 1

EP 0 228 333 A2

Bundesdruckerei Berlin

## Description

Procédé et dispositif de mesure de la résistance thermique d'un élément tel qu'un équipement de circuits intégrés de haute densité.

L'invention se rapporte à un procédé et un dispositif de mesure de la résistance thermique d'un élément et s'applique plus particulièrement aux équipements électroniques incorporant des sources de chaleur telles que des plaquettes de circuits intégrés désignées couramment par circuits intégrés, chips ou puces. Les équipements de circuits intégrés comprennent généralement une plaque dont une face est pourvue d'une couche de colle pour la fixation du ou des circuits intégrés. La plaque peut comporter un réseau électrique d'interconnexion en circuits imprimés et coopérer avec un élément de refroidissement, tel qu'un radiateur collé sur l'autre face de la plaque.

L'intégration de plus en plus élevée des circuits intégrés dans une plaquette de silicium a pour effet d'accroître la densité de la chaleur à dissiper. Même si certaines technologies de fabrication de transistors diminuent leur dissipation, l'accroissement de la densité de chaleur à dissiper demeure à cause des très hautes intégrations actuellement développées. Pour conserver l'avantage apporté par les très hautes intégrations de circuits intégrés, les équipements ou assemblages des puces pour leur incorporation dans une machine doivent être parfaitement adaptés à toutes les caractéristiques des puces. La solution adoptée est bien souvent le meilleur compromis entre les caractéristiques mécaniques, électriques et thermiques des éléments impliqués. Les caractéristiques mécaniques et électriques étant ordinairement connues de façon précise, le meilleur compromis ne peut être atteint que par la mesure précise des caractéristiques thermiques.

Il est d'autre part très intéressant de mesurer, dans les conditions réelles de fonctionnement d'un équipement de puces, la résistance thermique de tous les éléments qui composent le trajet d'évacuation de la chaleur entre une puce et l'air ambiant. Dans ces cas concrets, les mesures révèlent souvent des écarts importants par rapport à la valeur totale des résistances calculées à partir des conductivités thermiques des différents matériaux utilisés dans le trajet d'évacuation de la chaleur est. Il est donc très important de localiser l'origine de ces écarts dans le trajet d'évacuation de la chaleur. Par exemple, des écarts peuvent provenir des interfaces, d'une porosité d'un matériau produite lors de son application, ou d'une dérive de la résistance thermique d'un matériau sous l'influence de la chaleur ou d'un autre facteur extérieur.

Le brevet japonais publié sous le no 57-132046 décrit un procédé et un dispositif de mesure de la conductivité et de la capacité thermique d'un échantillon. Ce dispositif comprend une plaque de cuivre coopérant avec un thermostat servant de source chaude, et une plaque épaisse en acrylique. Les deux plaques présentent deux faces vis-à-vis destinées à enserrer l'échantillon et pourvues chacune d'un thermocouple. Le procédé consiste d'abord à placer l'échantillon sur la plaque en acrylique et à attendre qu'ils aient pris uniformément la température ambiante. Puis on place la plaque de cuivre dans le thermostat pour qu'elle prenne une température uniforme, on la sort du thermostat et on la met rapidement en contact avec l'échantillon. Au bout de trente secondes, on lit les températures au niveau des thermocouples. A partir des valeurs de température relevées et de l'épaisseur de l'échantillon notamment, on détermine la conductivité thermique de l'échantillon à partir d'abaques préétablis en fonction de divers paramètres.

Ce procédé est limité à la mesure de la résistance thermique d'un échantillon d'épaisseur uniforme. Il ne peut donc pas s'appliquer à la mesure de la résistance thermique d'un ensemble de structure composite, dont les composants ont des surfaces différentes et des épaisseurs non uniformes (par défaut de parallélisme notamment). Ceci est le cas typique d'un équipement de circuits intégrés. En outre, dans le dispositif antérieur, la plaque en acrylique est un isolant thermique qui ne peut avoir un rôle de radiateur ou de source froide. De ce fait, le procédé antérieur est fondé sur la chaleur spécifique (ou massique) qui est transférée de la plaque de cuivre à l'échantillon par unité de temps. En d'autres termes, il n'y a pas de circulation continue d'un flux de chaleur entre une source chaude et une source froide. Il n'est donc pas possible de mesurer selon ce procédé la résistance thermique d'un équipement de circuits intégrés placé dans les conditions réelles de fonctionnement. De plus, ce procédé s'accommode mal aux échantillons de masse relativement élevée ou de forte résistance thermique. Par ailleurs, le fait de retirer d'un thermostat la plaque de cuivre entraîne des pertes d'énergie incontrôlables. Le procédé antérieur ne peut ainsi s'accommoder de grands écarts de température entre les plaques, tels que ceux existant par exemple entre les composants actifs de la puce et son radiateur.

Enfin, le recours à des abaques suppose des expériences antérieures faites à partir d'échantillons connus et placés dans des conditions particulières restrictives. Il implique en outre un calcul par intra ou extrapolations. En conclusion, le procédé et le dispositif antérieur ne peuvent fournir des mesures très précises et très fiables de la résistance thermique de n'importe quel élément, de structure simple ou composite, placé dans des conditions quelconques.

La mesure de la résistance thermique d'un équipement de puce placé dans les conditions réelles de fonctionnement se fait donc selon un autre procédé. Le procédé classique de la mesure ne fait intervenir que la puce et son équipement. La puce constitue la source chaude et son équipement est relié à sa source froide placée dans les conditions réelles de fonctionnement. Puis on mesure le flux thermique (Q) produit par la puce et transmis à la source froide, ainsi que la température (T1) de la source chaude et (T2) de la source froide.

Le calcul de la résistance thermique (R) entre la puce et la source froide se fait par application de la formule R = (T1 - T2)/Q.

Ce procédé ne peut fournir que la valeur globale de la résistance thermique de tout le trajet d'évacuation de la chaleur entre la puce et l'air ambiant. Il ne permet donc pas de localiser un défaut dans ce trajet. D'autre part, cette mesure s'avère d'autant plus imprécise que les éléments sont de petites dimensions. En outre, la précision de la mesure se trouve affectée par l'imprécision de la mesure du flux thermique (Q) effectivement transmis de la puce à la source froide. En effet, si théoriquement la valeur de (Q) correspond à la puissance électrique fournie à la puce, dans la pratique une partie de cette puissance se dissipe par convexion naturelle. Par conséquent, la détermination précise de (Q) dans l'équation précitée n'est acquise qu'en connaissant précisément les pertes de puissance (q) dues à la convexion naturelle.

L'invention propose un procédé et un dispositif de mesure précise de la résistance thermique d'un élément simple ou composite. L'invention permet ainsi de mesurer tout ou partie du trajet thermique de l'équipement d'une puce et de localiser ainsi la présence d'un défaut et d'y remédier efficacement. D'autre part, l'invention donne la mesure précise des résistances thermiques grâce à la mesure précise des températures (T1, T2) et du flux thermique (Q).

Le procédé de mesure conforme à l'invention de la résistance thermique d'un élément, consistant à utiliser une source chaude et une source froide, à mesurer la température (T1) de la source chaude, la température (T2) de la source froide et le flux thermique (Q) s'écoulant de la source chaude à la source froide, et à calculer la résistance thermique (R) par application de la formule R = (T1 -T2/Q, est caractérisé en ce qu'il consiste à relier l'élément à la source chaude par l'intermédiaire d'un barreau massif, bon conducteur thermique et de section au moins approximativement égale à la section vis-à-vis de l'élément, à calculer la résistance thermique (R1) représentative du barreau et de l'élément, à enlever l'élément et calculer la résistance thermique (R2) représentative du barreau, et à déduire la résistance thermique (R3) de l'élément par soustraction de R2 à R1.

Un dispositif de mesure pour la mise en oeuvre du procédé de l'invention est caractérisé en ce qu'il comprend une source chaude et une source froide pourvues chacune d'un thermocouple et reliées par un barreau masif en matériau bon conducteur thermique en contact avec la source chaude et espacé de la source froide selon un écartement réglable.

Les caractéristiques et avantages de l'invention ressortiront de l'invention qui suit donnée à titre d'exemple et faite en référence aux dessins annexés.

Dans les dessins :

- la figure 1 est une vue schématique d'un dispositif de mesure conforme à l'invention illustrant une phase du procédé de mesure conforme à l'invention de la résistance thermique d'un élément tel qu'un équipement d'un circuit intégré ;

- la figure 2 est une vue similaire à celle de la figure 1 illustrant une variante de réalisation d'un dispositif de mesure conforme à l'invention représenté dans une seconde phase du procédé de l'invention ; et

- la figure 3 est un graphe utilisé pour la détermination des pertes d'énergie calorifique dans le dispositif représenté sur les figures 1 et 2.

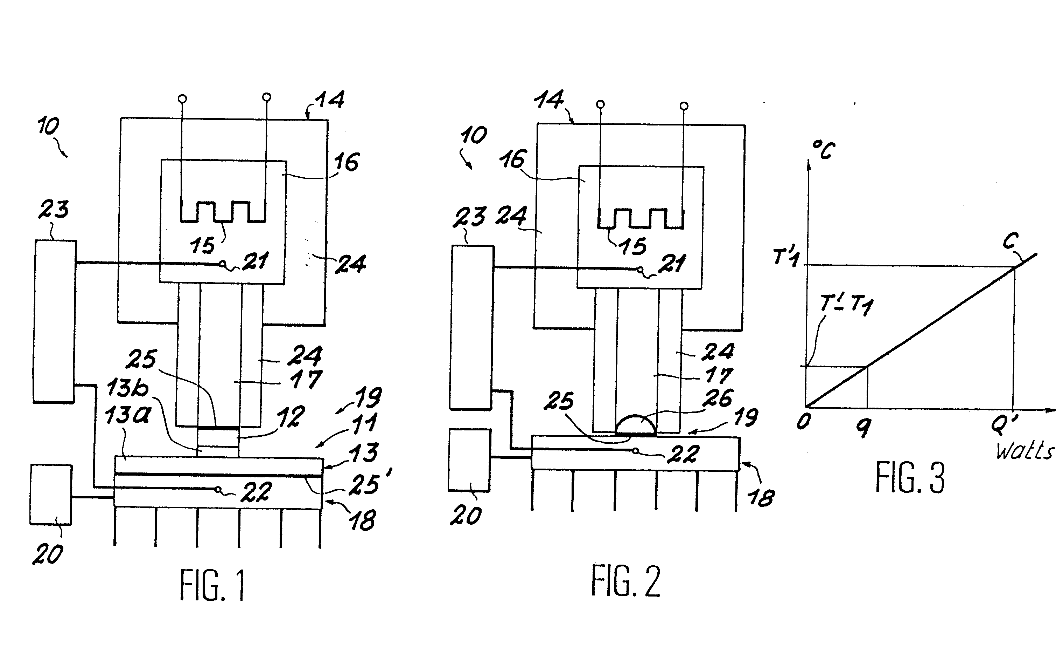

La figure 1 représente sous forme schématique un dispositif de mesure (10) conforme à l'invention pour déterminer la résistance thermique d'un élément (11). L'élément (11) illustré comprend un circuit intégré (12) et son équipement (13) composé simplement d'un support (13a) pourvu d'une couche de colle (13b) pour la fixation du circuit intégré (12).

Le dispositif de mesure (10) comprend une source chaude (14) formée par exemple d'une résistance électrique (15) connectée à une source de tension (non représentée) et noyée dans un bloc (16) en matériau bon conducteur thermique tel que le cuivre. La source chaude (14) est en contact avec une extrémité d'un barreau massif (17) en matériau bon conducteur thermique tel que le cuivre. L'autre extrémité du barreau (17) est placée en regard d'une source froide (18) selon un écartement (19) réglable au moyen d'un organe de commande classique (20). La source froide (18) illustrée est un radiateur éventuellement ventilé. Deux thermocouples (21, 22) sont respectivement placés dans la masse du bloc (16) de la source chaude (14) et dans la masse de la source froide (18), avantageusement dans l'axe du barreau (17), pour fournir à un instrument (23) un signal représentatif de la température (T1) de la source chaude (14) et un signal représentatif de la température (T2) de la source froide (18). La source chaude (14) et le barreau (17) sont pourvus d'un calorifugeage (24) pour limiter à une valeur bien déterminée les pertes de puissance (q) par convexion naturelle.

Le procédé conforme à l'invention pour la mesure précise de la résistance thermique de l'élément (11) est le suivant. L'élément (11) est placé entre le barreau (17) et la source froide (18). Etant donné que le procédé de l'invention est plus particulièrement adapté à la mesure d'une résistance thermique d'un élément placé dans les conditions réelles de fonctionnement, la source froide (18) est alors supposée être le radiateur devant équiper normalement l'élément (11) et opère dans les conditions réelles de fonctionnement. De ce fait, la puce (12) se trouve en contact avec le barreau (17). Pour des raisons de commodité qui apparaitront plus tard, le barreau (17) illustré a une section identique à celle de l'élément avec lequel il est en contact, c'est-à-dire à celle de la puce (12). Le contact entre la puce et le barreau forme une interface (25) qui sera commentée par la suite. La source chaude (14) est activée pour fournir une puissance thermique donnée, puis on attend que l'équilibre thermique s'installe dans tout le dispositif (10). Dans cet état d'équilibre, les deux températures (T1) et (T2) sont stabilisées et sont lues sur l'instrument de mesure (23). Ainsi est mesurée de façon précise la différence (T1 - T2) entrant dans la formule R = (T1 = T2)/Q. Il reste donc à connaître de façon précise la valeur du flux de chaleur (Q) qui traverse effectivement le barreau (17) et par conséquent l'élément (11). La valeur de (Q) correspond évidemment à la puissance (Q') fournie par la source chaude (14), diminuée des pertes de puissance (q) par convexion naturelle. Pour déterminer précisément le facteur (Q' - q), le procédé suivant peut être adopté. D'abord, on déconnecte la source de chaleur (14) du barreau (17) et on trace la courbe de référence représentative des variations de la température (T'1) au niveau du thermocouple (21) en fonction de la puissance thermique (Q') fournie par la résistance électrique (15). Ainsi on définit une température de référence (T'1) pour chaque quantité de chaleur (Q') capable d'être émise par la source (14) à son état d'équilibre thermique. Ensuite, pour la puissance (Q') spécifiquement fournie par la source (14) équipée du barreau (17) pour faire une mesure de résistance thermique conforme à l'invention, on mesure la température (T1) de la source chaude. La différence entre les températures (T'1 - T1) relatives à la même puissance (Q') correspond aux pertes (q). Pour l'évaluation de (q), il suffit de se reporter à la courbe de référence(C) pour déterminer l'écart de puissance correspondant à la différence (T'1 - T1). Dès lors, les valeurs de (T1 - T2) et de (Q) sont connues de façon précise et peuvent fournir la valeur de la résistance thermique (R1) de l'ensemble compris entre les sources (14) et (18) et incluant le barreau (17) et l'élément (11).

On procède ensuite à la mesure telle que représentée sur la figure 2. L'élément (11) est enlevé du dispositif (10) et la source froide (18) est mise en contact avec le barreau (17). L'interface (25) demeure mais réunit directement le barreau (17) au radiateur (18). Après équilibre thermique, on lit la température (T'2) au niveau du thermocouple (22) et l'on calcule la résistance R2 = (T1 -T'2)/Q relative cette fois à la resistance thermique du barreau (17) et de l'interace (24). La résistance thermique (R3) de l'élément (11) se déduit donc de la soustraction R2 - R1.

L'interface (25) peut être simplement formée par le contact direct du barreau (17) avec la puce (12) de l'élément (11) à la figure 1 ou avec le radiateur (18) à la figure 2. Cependant, cette interface est nulle seulement s'il y a contact en tout point de l'interface, c'est-à-dire si les faces vis-à-vis sont parfaitement planes et parallèles. Les cas pratiques s'écartent plus ou moins de cet état de perfection, surtout en fonction de la grandeur des surfaces vis-à-vis. A cause des imperfections, l'interface a non seulement une résistance thermique pouvant ne plus être négligeable, mais aussi cette résistance est variable selon le positionnement des faces en contact et des forces en cause. Il est donc nécessaire de donner à l'interface une valeur constante et pouvant être connue de manière très précise afin de conserver la précision des résistances thermiques mesurées et de permettre la reproductibilité des mesures. Pour ce faire, le procédé conforme à l'invention consiste en outre à constituer l'interface (25) par un joint de matière visqueuse bonne conductrice thermique, telle qu'une graisse au silicone. Etant donné que le joint (25) est commun aux deux étapes du procédé représenté sur les figures 1 et 2 et que la valeur de (R2) mesurée selon la figure 2 inclut la résistance du joint (25), la valeur de la résistance du joint (25) n'a pas à être mesurée. Cependant, il s'avère aussi nécessaire de disposer un joint similaire pour constituer l'interface (25') entre l'élément (11) et le radiateur (18). Dans ce cas, la résistance thermique du joint (25') est incluse dans la valeur de (R3) et doit être retranchée de (R3) pour connaître la valeur précise de la résistance thermique de l'élément (11). Un procédé de mesure du joint (25') peut consister à remplacer l'élément (11) par une pièce massive homogène en matériau bon conducteur thermique tel que le cuivre, ayant une section déterminant une interface (25') identique à l'interface (25') de l'élément à mesurer et une épaisseur prédéterminée. Le procédé conforme à l'invention aboutira à une valeur (R'3) représentative de la résistance thermique du bloc de cuivre et du joint (25'). La résistance thermique du bloc de cuivre est facilement déterminée par un calcul tenant compte de la résistivité thermique du cuivre et des dimensions du bloc. La différence ce cette valeur avec (R'3) donne la valeur de la résistance thermique de l'interface (25').

En outre, il est très probable qu'un élément (11) de structure complexe ait des faces inférieure et supérélllure présentant des défauts de planéité ou de paraléllisme. Dans ce cas, la mise en place de l'élément (11) entre le barreau (17) et le radiateur (18) risque d'exercer sur lui des contraintes dommageables et susceptibles de fausser les mesures. Elle donne aussi aux interfaces (25), (25') des épaisseurs non uniformes préjudiciables à la précision des mesures. Le dispositif de mesure (10) conforme à l'invention peut remédier à cet inconvénient en donnant au barreau (17) la structure représentée sur la figure 2 au niveau de la surface (25). A ce niveau, la face correspondante du barreau (17) est formée par la face plane d'une rotule (26) approximativement hémisphérique, logée dans une cavité correspondante du barreau. La modification résultante de la résistance thermique du barreau (17) a l'avantage d'être constante et d'être incluse dans les valeurs (R1, R2), de telle sorte que la modification n'a pas à être mesurée.

L'exemple qui vient d'être décrit aux figures 1 et 2 correspond au cas où la section du barreau (17) est identique à la section de la face vis-à-vis de l'élément (11). Il apparait maintenant clairement que cette condition s'avère idéale du fait que les lignes de flux de la chaleur sont uniformes dans le barreau jusqu'à l'interface (25) incluse. Cependant, cette condition exige de conformer le barreau (17) en fonction des éléments à mesurer. Pour une grande variété de sections d'éléments à mesurer, il sera préférable de donner au barreau la plus grande section des éléments susceptibles d'être mesurés. Pour une valeur de section plus faible, les lignes de flux se resserrent au niveau de l'interface (24) et vont perturber les mesures. Cependant, un étalonnage préalable peut être fait, par exemple en comparant les mesures avec celles obtenues dans les conditions idéales d'égale section entre barreau (17) et élément (11).

En outre, on peut considérer qu'un barreau (17) de section légèrement inférieure à la surface vis-à-vis de l'élément (11) ne perturbe pas les mesures si le matériau de l'élément au niveau de l'interface (25) et relativement bon conducteur thermique. Dans ce cas, on considère que la température est uniforme dans tout ce matériau. C'est le cas par exemple d'un matériau de section carrée mesuré avec un barreau (17) de section correspondant au cercle inscrit dans le carré. Cependant, si une perturbation existait, il serait possible d'en tenir compte dans les calculs de la résistance de ce matériau. On peut dire ainsi qu'en règle générale la section du barreau doit être au moins approximativement égale à la surface vis-à-vis de l'échantillon. Il en est de même pour l'interface (25').

Il ressort de la description qui précède que le procédé de l'invention s'applique indifféremment à tout élément de structure simple ou composite. Pour un élément de structure composite tel que l'élément (11) représenté sur la figure 1, le procédé de l'invention a l'avantage de déterminer la résistance thermique de chacune de ses parties constituantes. Par exemple, en éliminant la puce (12) de l'élément (11) représenté et en procédant aux mesures conformes à l'invention, on détermine la résistance thermique du support (13) et, par soustraction à (R3), la résistance thermique de la puce (12). Ensuite, en éliminant du support (13) la couche de colle (13b) et en procédant aux mesures conformes à l'invention, on connait la résistance thermique du support (13a) et, par déduction, la résistance thermique de la couche de colle (13b).

## Revendications

1. Procédé de mesure de la résistance thermique d'un élément (11), consistant à utiliser une source chaude (14) et une source froide (18), à mesurer la température (T1) de la source chaude, la température (T2) de la source froide et le flux thermique (Q) s'écoulant de la source chaude à la source froide, et à calculer la résistance thermique (R) par application de la formule R = (T1 -T2)/Q, caractérisé en ce qu'il consister à relier l'élément (11) à la source chaude (14) par l'intermédiaire d'un barreau massif (17) bon conducteur thermique et de section au moins approximativement égale à la section vis-à-vis de l'élément (11), à calculer la résistance thermique (R1) représentative du barreau (17) et de l'élément (11), à enlever l'élément (11) et calculer la résistance thermique (R2) représentative du barreau (17), et à déduire la résistance thermique (R3) de l'élément (11) par soustraction de (R2) à (R1).

2. Procédé selon la revendication 1, caractérisé en ce qu'il consiste à constituer les interfaces (24, 24') entre l'élément (11), le barreau (17) et la source froide (18) par des joints de matière visqueuse bonne conductrice thermique.

3. Procédé selon la revendication 2, caractérisé en ce qu'il consiste à mesurer la résistance thermique d'un joint (24') en substituant à l'élément (11) un bloc formé d'un matériau de résistivité thermique bien connu, ayant une épaisseur prédéterminée et une section reproduisant l'interface à mesurer.

4. Procédé selon l'une des revendications 1 à 3, caractérisé en ce qu'il consiste à déterminer la valeur de (Q) en traçant une courbe de référence représentative des variations de la température (T'1) en un point donné (21) de la source chaude seule (14) en fonction de la puissance thermique (Q') reçue par la source chaude, en relevant lors d'une mesure faite sur un élément (11) à une puissance thermique donnée (Q') la température (T1) de la source chaude audit point donné, en déduisant de la courbe de référence les pertes de puissance thermique (q) correspondant à la différence de température (T'1 - T1), et en déterminant la valeur de (Q) de la différence (Q' -q).

5. Dispositif de mesure pour la mise en oeuvre du procédé défini par l'une des revendications 1 à 4, caractérisé en ce qu'il comprend une source chaude (14) et une source froide (18) pourvues chacune d'un thermocouple (21, 22) et reliées par un barreau massif (17) en matériau bon conducteur thermique en contact avec la source chaude et espacé de la source froide (18) selon un écartement (19) réglable.

6. Dispositif selon la revendication 5, caractérisé en ce que le barreau (17) comporte au niveau de l'écartement (19) une rotule (25) pourvue d'une face plane disposée vis-à-vis de la source froide.

7. Dispositif selon la revendication 5 ou 6, caractérisé en ce que la source chaude (14) est constituée par une résistance électrique (15) noyée dans un bloc bon conducteur thermique (16).

8. Dispositif selon la revendication 7, caractérisé en ce que la source chaude et le barreau sont pourvus d'un calorifugeage (24).

0228333

FIG. 1

FIG. 2

FIG. 3